# EUROPEAN PATENT APPLICATION

(11) **EP 1 523 218 A1**
(43) Date of publication of application: **13.04.2005**
(21) Application number: 03445111.2
(22) Date of filing: 10.10.2003
(51) Int. Cl.: H04R 3/04, H04R 3/08, H04M 1/60

(54) **Method of controlling a loudspeaker system and device incorporating such control**

(71) Applicant: Sony Ericsson Mobile Communications AB, 221 88 Lund (SE)
(72) Inventor: Isberg, Peter, 224 72 Lund (SE); Ormin, Mats, 212 32 Malmö (SE)
(74) Representative: Akerman, Marten Lennart

(57) **Abstract**

The invention relates to a method of controlling a loudspeaker system, and more particularly a method of controlling a loudspeaker in a handheld device wherein the control depends on the acoustical load on the speaker system. The present invention also relates to a device incorporating such control. The device (I) includes a drive circuit (3) with an amplifying function (4, 5) for amplifying an original signal to a sound signal (9) and a loudspeaker system (2) for producing sound from the sound signal. The loudspeaker system (2) is monitored (8) for changes in the electrical impedance thereof; and changes are used to adjust the amplifying function of the drive circuit (3). Preferably, the changes in the electrical impedance of the loudspeaker system (2) are mirrored on the behaviour of an acoustic impedance of a leaky loudspeaker system for generating an adjustment function which is applied to adjust the amplifying function of the drive circuit.

## Description

### Field of the invention

The present invention relates to a method of controlling a loudspeaker system, and more particularly a method of controlling a loudspeaker in a handheld device wherein the control depends on the acoustical load on the speaker system. The present invention also relates to a device incorporating such control.

The invention provides an electronic compensation of acoustical loads varying with how the device is held against the user's ear.

### State of the art

Conventional landline telephones have usually large handsets and industrial designs optimised for a good mechanical interface towards the ear, such that there is substantially no leak between the telephone and the ear and a perfect seal is created. Conventional landline telephones also use large speakers with relatively low acoustical impedance making them less sensitive to changes in acoustical load impedance. Thus, even if there is a leaky interface between the speaker and the ear, this is not a big problem since, due to the large size, the difference in sound pressure between a sealed case and a leaky case is smaller.

However, contemporary mobile telephones are built ever smaller with small sound transducers and sound holes. The size of components has created a situation where a tinny and weak sound is often experienced. This is further worsened by the, from an acoustical standpoint, non-ergonomic design forced by porting (sound holes) close to the edges and attractive curved designs etc. A small transducer (loudspeaker) has inherently high acoustical impedance due to the size. When such a small telephone is held against the ear, often leaks occur due to the small size of the telephone. The leaks act like a low electrical impedance load on the transducer, which is mostly noticed at low frequencies as a bass roll-off. In a small transducer with high acoustical impedance there will thus be a substantial loss of low frequencies in the leaky case.

In the prior art, this problem has been addressed to make the sound more similar for different amounts of leaks. Special acoustical designs are used where special leak holes "pre-loads" the speaker, creating almost an acoustical short circuit. To maintain the loudness, more power has to be consumed by the transducer and very thin membranes are normally needed to lower the resonance frequency of the device.

### Summary of the invention

The object of the invention is to solve the problem of varying acoustical loads on a speaker system, such that the sound reproduction is always optimal without consuming an unnecessary amount of power. The object is achieved by adjusting the electronics driving the speaker system in a way that reflects the changes in the acoustical impedance of the sound system.

In a first aspect, the invention provides a method of controlling a loudspeaker in a handheld device including a drive circuit with an amplifying function for amplifying an original signal to a sound signal and a loudspeaker system for producing sound from the sound signal.

According to the invention, the loudspeaker system is monitored for changes in the electrical impedance thereof; and said changes are used to adjust the amplifying function of the drive circuit.

Preferably, the changes in the electrical impedance of the loudspeaker system are mirrored on the behaviour of an acoustic impedance of a leaky loudspeaker system for generating an adjustment function which is applied to adjust the amplifying function of the drive circuit.

The mirroring step may employ filtering or an FFT or other frequency domain analysis of the electrical impedance.

The adjustment function may take resonance frequencies of the loudspeaker system into account.

Suitably, the level and filtering of the amplifying function is adjusted.

In one embodiment, only certain frequency bands are filtered.

Suitably, the amplifying function equals 1 for a sealed loudspeaker system.

In one embodiment, the level/gain of the amplifying circuitry is limited to a preset value, or the power of the loudspeaker signal is limited to a preset value, for a sealed loudspeaker system.

Preferably, the electrical impedance is monitored by measuring the voltage and current of the drive circuit.

The current may be measured by a current sensor located in the drive circuit.

In a second aspect, the invention provides a handheld device including a drive circuit with an amplifying function for amplifying an original signal to a sound signal and a loudspeaker system for producing sound from the sound signal.

According to the invention, the device comprises means for monitoring the loudspeaker system for changes in the electrical impedance thereof; and
control means adapted to use any changes to adjust the amplifying function of the drive circuit.

Preferably, the control means is adapted to mirror changes in the electrical impedance of the loudspeaker system on the behaviour of an acoustic impedance of a leaky loudspeaker system for generating an adjustment function which is applied to adjust the amplifying function of the drive circuit.

The monitor means may include a filter or an FFT or other frequency domain analysis means for mirroring of the electrical impedance.

The adjustment function may take resonance frequencies of the loudspeaker system into account.

Suitably, the control means is adapted to adjust the level and filtering of the amplifying function.

In one embodiment, the control means is adapted to filter only certain frequency bands.

Suitably, the amplifying function equals 1 for a sealed loudspeaker system.

In one embodiment, the level/gain of the amplifying circuitry is limited to a preset value, or the power of the loudspeaker signal is limited to a preset value, for a sealed loudspeaker system.

Preferably, the monitoring means is adapted to monitor the electrical impedance by measuring the voltage and current of the drive circuit.

The monitoring means may comprise a current sensor located in the drive circuit.

The device may be a portable telephone, a pager, a communicator, a smart phone, a landline phone, a land mobile radio equipment, a music playing device or an electronic organiser.

### Brief description of the drawings

The invention will be described in detail below with reference to the accompanying drawings, in which:
fig. 1 is a schematic view of relevant components of the device according to the invention; and
figs. 2 A and 2 B are schematic views of a device held against a user's ear in a leaky case and a sealed case, respectively.

### Detailed description of preferred embodiments

The present invention is most useful in small handheld devices with a high impedance loudspeaker system having a small size. Examples of such devices are portable telephones, pagers, communicators, smart phones, landline phones, land mobile radio equipment, a music playing devices or electronic organisers. Even though the invention is most likely to be used in portable telephones, the invention is not limited to this case.

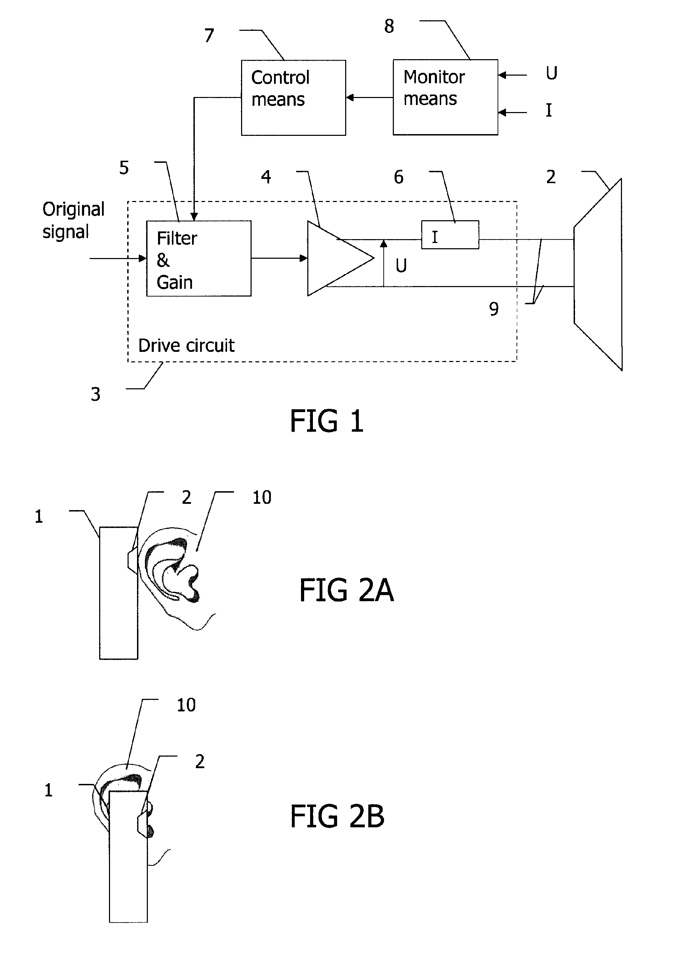

Fig. 1 shows a schematic drawing of relevant components of such a device. The remainder of the device may be conventional and are not shown here for better clarity. The device comprises a sound transducer or loudspeaker system 2 producing sound originating from an original signal. A drive circuit 3 transforms the original signal to the appropriate sound signals 9 to the speaker. Generally, the drive circuit comprises an amplifier 4 and adjustable filter and gain circuitry 5.

Fig. 2 A shows a leaky case, i.e. the handheld device 1 is held in the vicinity of the ear 10 and there are acoustic leaks between the speaker 2 and the ear 10. This is often the case when the device is held obliquely to the ear because of inability to position the device properly or because the user wants to listen to surrounding sound as well. The acoustic leaks act like a low impedance load on the speaker 2 leading to impaired reproduction of bass sounds, which should be compensated for.

Fig. 2 B shows a sealed case, i.e. the speaker 2 of the device 1 is placed in close contact with the ear 10, sealing-off the space between the speaker and the ear hole. This case has high acoustic impedance, thus not affecting the sound reproduction in a substantial amount.

The idea of the invention is that a leaky case is detected and the drive circuit is adjusted to compensate for the varying acoustic impedance situations.

Changes in the acoustical load on the speaker system will slightly influence the electrical impedance of the speaker. Thus, the impedance of the speaker is monitored by a monitoring means 8 using the voltage U and current I to the speaker 2. By measuring the electrical impedance, it can be decided if the user seals the phone tightly to the ear or if there is a major leak between the phone and the ear. To measure the current I a current sensor 6 is included in the drive circuit. The current sensor 6 may be of conventional design. A control means 7 calculates the impedance in real time using the electrical voltage and the current information. The control means should preferably mimic the behaviour of an acoustically created leak tolerant solution (low acoustical impedance). In other words, the acoustical load is mirrored to the electrical domain. Changes in the acoustical system are detected in order to make the electrical adjustments necessary for compensating the existing leak. An adjustment function is generated which is applied by the control means 7 on the amplifying circuitry 4, 5 to compensate for variations in acoustic impedance, so that the sound reproduction is kept optimal. When an acoustic leak is detected by monitoring the electrical impedance, the level/gain and filtering is adjusted, suitably such that the low frequency part of the loudspeaker signal 9 is amplified.

In another embodiment, the monitoring means 8 is used to detect when the phone is placed in close contact with the ear, in order to avoid loud sound volumes. When the acoustical load impedance is detected at a maximum, this indicates that the phone is placed in close contact with the ear as in a perfectly sealed case, and the level/gain of the amplifying circuitry 4, 5 is limited to a preset value. Alternatively, the power of the loudspeaker signal 9 is limited to a preset value.

Thus, the impedance information is used to adjust the level/gain and filtering 5 of the loudspeaker signal 9. It may be beneficial to use information from certain frequency bands only, using e.g. analog or digital filtering, or an FFT (Fast Fourier Transform) or other signal processing of the impedance. For instance, the resonance frequency of the speaker system is of special interest and may be taken into account to boost and attenuate various frequencies.

The present invention thus provides an electronical solution to the problem of leaky acoustic systems. The solution has several advantages over the prior art. Less space is required for portings etc in the shell of the device having a limited size. Simpler and more robust mechanics (higher yield) may be used. A more natural sound reproduction is achieved with less distortion. The adjustment function may be electrically turned on and off for different use cases. For instance, in a perfectly sealed case the adjustment equals 1, in other words no adjustment is made. An automatic limitation of the sound signal may be provided in case the phone is placed against the ear.

A person skilled in the art will realise that the invention may be implemented by various combinations of hardware and software. The scope of the invention is only limited by the claims below.

## Claims

1. A method of controlling a loudspeaker in a handheld device (1) including a drive circuit (3) with an amplifying function (4, 5) for amplifying an original signal to a sound signal (9) and a loudspeaker system (2) for producing sound from the sound signal, **characterised by** the steps of:
monitoring (8) the loudspeaker system (2) for changes in the electrical impedance thereof;
using said changes to adjust the amplifying function (4, 5) of the drive circuit.

2. A method according to claim 1, **characterised in that** the changes in the electrical impedance of loudspeaker system (2) are mirrored on the behaviour of an acoustic impedance of a leaky loudspeaker system for generating an adjustment function which is applied to adjust the amplifying function (4, 5) of the drive circuit (3).

3. A method according to claim 2, **characterised in that** mirroring step employs filtering of the electrical impedance.

4. A method according to claim 2, **characterised in that** mirroring step employs an FFT or other frequency domain analysis of the electrical impedance.

5. A method according to claim 2, 3 or 4, **characterised in that** the adjustment function takes resonance frequencies of the loudspeaker system into account.

6. A method according to any one of the preceding claims, **characterised in that** the level and filtering (5) of the amplifying function is adjusted.

7. A method according to claim 6, **characterised in that** only certain frequency bands are filtered.

8. A method according to any one of claims 1 to 7, **characterised in that** the amplifying function equals 1 for a sealed loudspeaker system.

9. A method according to claim 1 to 7, **characterised in that** the level/gain of the amplifying circuitry (4, 5) is limited to a preset value for a sealed loudspeaker system.

10. A method according to claim 1 to 7, **characterised in that** the power of the loudspeaker signal (9) is limited to a preset value for a sealed loudspeaker system.

11. A method according to any one of the preceding claims, **characterised in that** the electrical impedance is monitored by measuring the voltage (U) and current (I) of the drive circuit (3).

12. A method according to claim 11, **characterised in that** the current is measured by a current sensor (6) located in the drive circuit.

13. A handheld device (1) including a drive circuit (3) with an amplifying function (4, 5) for amplifying an original signal to a sound signal (9) and a loudspeaker system (2) for producing sound from the sound signal, **characterised by**:
means (8) for monitoring the loudspeaker system (2) for changes in the electrical impedance thereof; and
control means (7) adapted to use any changes to adjust the amplifying function (4, 5) of the drive circuit (3).

14. A device according to claim 13, **characterised in that** the control means (7) is adapted to mirror changes in the electrical impedance of the loudspeaker system (2) on the behaviour of an acoustic impedance of a leaky loudspeaker system for generating an adjustment function which is applied to adjust the amplifying function (4, 5) of the drive circuit (3).

15. A device according to claim 14, **characterised in that** the monitor means (8) includes a filter for mirroring of the electrical impedance.

16. A device according to claim 14, **characterised in that** the monitor means (8) includes an FFT or other frequency domain analysis means for mirroring of the electrical impedance.

17. A device according to claim 14, 15 or 16, **characterised in that** the adjustment function takes resonance frequencies of the loudspeaker system into account.

18. A device according to any one of claims 13 to 17, **characterised in that** the control means (7) is adapted to adjust the level and filtering (5) of the amplifying function.

19. A device according to claim 18, **characterised in that** the control means (7) is adapted to filter only certain frequency bands.

20. A device according to any one of claims 13 to 19, **characterised in that** the amplifying function equals 1 for a sealed loudspeaker system.

21. A device according to claim 13 to 19, **characterised in that** the level/gain of the amplifying circuitry (4, 5) is limited to a preset value for a sealed loudspeaker system.

22. A device according to claim 13 to 19, **characterised in that** the power of the loudspeaker signal (9) is limited to a preset value for a sealed loudspeaker system.

23. A device according to any one of claims 13 to 22, **characterised in that** the monitoring means (8) is adapted to monitor the electrical impedance by measuring the voltage (U) and current (I) of the drive circuit (3).

24. A device according to claim 23, **characterised in that** the monitoring means comprises a current sensor (6) located in the drive circuit (3).

25. A device according to any one of claims 13 to 24, **characterised in that** the device (1) is a portable telephone, a pager, a communicator, a smart phone, a landline phone, a land mobile radio equipment, a music playing device or an electronic organiser.
